# EUROPEAN PATENT SPECIFICATION

(11) **EP 3 614 401 B1**
(45) Date of publication and mention of the grant of the patent: **26.05.2021**
(21) Application number: 19196424.6
(22) Date of filing: 17.08.2016
(51) Int. Cl.: H01B 3/56, B01D 53/00, H01H 33/64, H02B 13/055, H01H 33/56

(54) **METHOD FOR RECLAIMING AT LEAST ONE SUBSTANCE FROM AN INSULATION MEDIUM OF AN ELECTRICAL APPARATUS FOR THE GENERATION, TRANSMISSION, DISTRIBUTION AND/OR USAGE OF ELECTRICAL ENERGY**
VERFAHREN ZUR RÜCKGEWINNUNG VON ZUMINDEST EINEM STOFF AUS EINEM ISOLIERMEDIUM EINER ELEKTRISCHEN VORRICHTUNG ZUR ERZEUGUNG, ÜBERTRAGUNG, VERTEILUNG UND/ODER NUTZUNG VON ELEKTRISCHER ENERGIE
PROCÉDÉ DE RÉCUPÉRATION D'AU MOINS UNE SUBSTANCE À PARTIR D'UN MILIEU ISOLANT D'UN APPAREIL ÉLECTRIQUE POUR LA GÉNÉRATION, LA TRANSMISSION, LA DISTRIBUTION ET/OU L'UTILISATION D'ÉNERGIE ÉLECTRIQUE

(30) Priority: 19.08.2015 WO PCT/EP2015/069084
(43) Date of publication of application: 26.02.2020
(62) Divisional of application: 16753652.3
(73) Proprietor: ABB Power Grids Switzerland AG, 5400 Baden (CH)
(72) Inventor: TEMP, Bjoern, 51105 Köln (DE); CLAESSENS, Max-Steffen, 5417 Untersiggenthal (CH); SCHNEZ, Stephan, 8037 Zürich (CH)
(74) Representative: Epping - Hermann - Fischer

(56) References cited:
- WO-A1-2010/142346
- WO-A1-2014/037031
- WO-A1-2014/053661
- US-A- 5 701 761

## Description

The present invention relates to a method for reclaiming at least one substance from an insulation medium of an electrical apparatus for the generation, transmission, distribution and/or usage of electrical energy. The invention further relates to a substance reclaiming device as well as to an assembly comprising an electrical apparatus and the substance reclaiming device.

Dielectric insulation media in liquid or gaseous state are conventionally applied for the insulation of an electrical component in a wide variety of apparatuses, such as for example switchgears, gas-insulated substations (GIS), gas-insulated lines (GIL), or transformers.

In medium or high voltage metal-encapsulated switchgears, for example, the electrical component is arranged in a gas-tight housing, the interior of which defines an insulating space, said insulation space comprising an insulation gas and separating and electrically insulating the housing from the electrical component. For interrupting the current in a high voltage switchgear, the insulating gas further functions as an arc extinction gas.

Recently, the use of organofluorine compounds in an insulating gas has been suggested. Specifically, WO 2010/142346 discloses a dielectric insulation medium comprising a fluoroketone having 4 to 12 carbon atoms. A dielectric insulation medium of particular relevance is further disclosed in WO 2012/080246, relating to a medium comprising a dielectric insulation gas, which comprises a fluoroketone containing exactly 5 carbon atoms in a mixture with a dielectric insulation gas component different from said fluoroketone. Still further, WO 2012/080222 discloses a dielectric insulation medium comprising a hydrofluoromonoether.

The fluoroketones according to WO 2010/142346 and WO 2012/080246 as well as the hydrofluoromonoethers according to WO 2012/080222 have been shown to have high insulation capabilities, in particular a high dielectric strength, as well as high arc extinction capabilities. At the same time, they have a very low Global Warming Potential (GWP) and very low toxicity. The combination of these characteristics renders these organofluorine compounds highly suitable as a substitute for SF₆ (sulphur hexafluoride), which is commonly used as a dielectric insulation medium, but which is known to have a high GWP.

Notwithstanding their low GWP and toxicity, it would be highly desirable to keep the amount of organofluorine compound to be used during long term operation of the apparatus to a minimum for both ecological and economic reasons.

However, in particular during e.g. a switching operation, which is accompanied by a high temperature increase in the insulation space, organofluorine compounds can be subject to decomposition. Contrary to SF₆, the decomposed organofluorine compounds usually do not recombine.

In order to keep the insulation space essentially free from harmful decomposition products, WO 2014/053661 suggests an apparatus for the generation, distribution and/or usage of electrical energy comprising a molecular sieve arranged such as to come into contact with the insulation gas, the molecular sieve having an average pore size greater than the molecular size of at least one decomposition product of the organofluorine compound generated during operation of the apparatus.

During decommissioning and maintenance activities (e.g. reconditioning after a heavy short circuit event) it may be required to reduce the pressure in the insulation space to a safe level proper for handling.

When applying conventional evacuation techniques using a pump, problems regarding the removal of the insulation medium are particularly pronounced, since the boiling point of the organofluorine compound comprised in the insulation medium is typically relatively high.

In order to provide an electrical apparatus which allows to minimize the amount of organofluorine compound to be used and which at the same time allows for a safe overall operability, international patent application No. PCT/EP2014/060300 (not yet published) suggests an electrical apparatus comprising a separator, which is or comprises a liquefaction device, specifically a cooler for cooling the initial gas mixture down to a temperature below the dew point of the organofluorine compound. Despite of the favourable effects achievable by the technology according to international patent application No. PCT/EP2014/060300, the cooler must provide a very high cooling efficiency in order to achieve a sufficient condensation rate of the organofluorine compound. This is owed to the fact that the initial gas mixture enters the cooler with the pressure present in the insulation space of the electrical apparatus.

In order to achieve an acceptable condensation rate of the high-boiling organofluorine compound, the insulation space of the electrical apparatus is typically evacuated, i.e. down to a pressure of less than 0.1 bar, and the extracted gas mixture is cooled to very low temperatures. With the aid of standard cooling media, minimum temperatures of about -38°C are achievable. If lower temperatures shall be reached, alternative cooling media should be used. However, these alternative cooling media are expensive and thus not desirable. Also, the evacuated housing is subject to a very high differential pressure, i.e. about 1 bar, requiring that the housing walls have a minimum thickness in order to safely withstand the pressure difference between the ambience and the interior space.

In consideration of this, the problem to be solved by the present invention is to provide a method for the efficient reclaiming of at least one substance from an insulation medium, in particular of an organofluorine compound, and at the same time allowing for a safe overall operability of the electrical apparatus in which the insulation medium is used.

With regard to the technology described in international patent application PCT/EP2014/060300, the present invention shall in particular allow for a high reclaiming yield of the organofluorine compound and liquefaction of this compound at relatively low efforts.

More particularly, a high reclaiming yield shall be allowed also in the case where the insulation space of the apparatus is not thoroughly evacuated, ultimately allowing for relatively thin housing walls of the electrical apparatus.

The problem of the present invention is solved by the subject matter of the independent claims. Preferred embodiments are defined in the dependent claims and claim combinations. According to claim 1, the present invention relates to a method for reclaiming at least one substance from an insulation medium of an electrical apparatus for the generation, transmission, distribution and/or usage of electrical energy, the insulation medium comprising an organofluorine compound and at least one further component in gaseous phase, said method comprising the subsequent steps of:
a) transferring an initial gas mixture containing the organofluorine compound and at least one further component of the insulation medium out of an insulation space of the electrical apparatus into a substance reclaiming device,
b) liquefying the organofluorine compound in the substance reclaiming device by
   b1) compressing the initial gas mixture, and
   b2) cooling the compressed initial gas mixture down to a temperature where the organofluorine compound liquefies, and
c) separating the liquefied organofluorine compound from the remaining gas comprising the at least one remaining component of the initial gas mixture.

The term "initial gas mixture" as used in the context of the present invention is to be interpreted broadly and encompasses any possible gas mixture containing the organofluorine compound and at least one further component of the insulation medium.

This at least one further component can in particular be a background gas (or "carrier gas") or a background gas component, as will be discussed in further detail below, but can also be a decomposition product generated from the organofluorine compound.

According to one specific embodiment, the initial gas mixture is at least essentially identical to the insulation medium. In this regard, the term "insulation medium" relates to the insulation medium to be replaced, i.e. the insulation medium (or its composition) present in the insulation space at the time directly prior to reconditioning. It is understood that the composition of the insulation medium can change over time, specifically due to the mentioned decomposition phenomena. For example, partial decomposition of the organofluorine compound can occur during a switching operation of a switching component. Thus, the insulation medium to be replaced has in comparison to the insulation medium used for filling the insulation space a lower amount of organofluorine compound and a higher amount of decomposition products.

Alternatively, the term "insulation medium" can also relate to the insulation medium used for filling the insulation space, i.e. the fresh mixture, provided that it contains apart from the organofluorine compound a further component, typically the background gas. The fresh mixture is typically devoid of any decomposition products.

As mentioned, reclaiming of the substance is according to the invention obtained by liquefaction. Specifically, the terms "liquefying" or "liquefaction" as used in the context of the present invention is to be interpreted as a phase transition of the respective substance, particularly the gaseous organofluorine compound, to the liquid phase. More specifically, a phase separation is achieved by the liquefaction, which allows the substances of the respective phases to be separated in very simple manner, e.g. by draining the liquid phase.

After liquefaction and separation of the organofluorine compound, the remaining gas is preferably at least essentially devoid of organofluorine compound. More preferably, the remaining gas at least essentially corresponds to the background gas of the insulation medium. Of course, minor amounts of the organofluorine compound can still be contained in the remaining gas, but these amounts are in any case lower than the amounts contained in the initial gas mixture, as will be discussed in further detail below.

The concept of separating the organofluorine compound from the remaining components by phase separation is in any respect different from the concept suggested in WO 2014/053661 which aims at removing gaseous decomposition products from the insulation gas by means of a molecular sieve: first of all, WO 2014/053661 relates to a mere purification of the insulation gas by removing gaseous decomposition products therefrom, but nowhere mentions or suggests a phase separation of components each of which having the potential to be re-used in the electrical apparatus. In more concrete terms, WO 2014/053661 nowhere mentions or suggests a separation of an organofluorine compound from a background gas, but merely the removal or separation of gaseous decomposition products from an insulation gas containing an organofluorine compound and a background gas. Secondly, the means that are applied are completely different, in that according to WO 2014/053661 a molecular sieve and hence a separation on the basis of the kinetic diameter of the molecules is applied, whereas according to the present invention a separation on the basis of the different boiling points of the substances is performed.

In aiming at a high reclaiming yield of the organofluorine compound in pure form, the present invention is further completely different from the concept of US 5,701,761 which does not deal with the reclaiming of a substance, least of all a dielectric compound, but which aims at simplifying a process for liquefying a natural gas and in this regard suggests to mix a liquid fraction with a vapour fraction.

The present invention allows the organofluorine compound to be reclaimed in high yields, which is not only highly advantageous from an economic point of view. Since disposal of the organofluorine compound can be omitted, the present invention also brings an ecologic benefit. In particular, the present invention allows high yields of the reclaimed organofluorine compound to be achieved in a very simple and fast manner. This is owed to the fact that by compressing the initial gas mixture, relatively moderate cooling temperatures are sufficient for obtaining a high condensation rate of the organofluorine compound. Therefore, standard cooling media are sufficient for obtaining a high reclaiming yield.

Typically, the remaining gas, which directly after step c) has a relatively high pressure due to its prior compression in step b1), is expanded via a balancing valve. After expansion, the remaining gas or a portion thereof is preferably reintroduced back into the insulation space. Alternatively or additionally, the remaining gas or a portion thereof can be released into the atmosphere. This applies in particular to the case where the remaining gas is non-hazardous to the environment.

In this regard, it is particularly preferred that the method of the present invention comprises the further step of
d) expanding the remaining gas via a balancing valve and reintroducing at least a portion of the remaining gas, specifically the background gas, back into the insulation space.

If - as according to this embodiment - the remaining gas is reintroduced into the insulation space, the absolute pressure in the insulation space will never drop below the partial pressure of the background gas. Due to the lower differential pressure that the housing enclosing the insulation space has to withstand, the housing walls can be designed thinner as it would be the case for a housing which has to withstand thorough evacuation and thus a differential pressure of e.g. about 1 bar.

Specifically, the reintroduced remaining gas corresponds to the background gas of the insulation medium. It is understood that the reintroduced remaining gas can also contain a minor amount of organofluorine compound, since the separation according to step c) is typically not perfect due to physical and/or technical reasons. However, it has been found that by repeated recycling, i.e. by repeatedly performing steps a) to d), the amount of organofluorine compound in the reintroduced remaining gas is continuously decreased until reaching a minimum value. At the same time, the yield of organofluorine compound reclaimed is increased.

The concept of reintroducing the remaining gas, i.e. the gas from which the liquefied organofluorine compound has been separated, is in any respect different from the concept according to WO 2015/177149 having a publication date after the priority date of the present application, since WO 2015/177149 teaches the separated organofluorine compound to be reintroduced into the insulation space, but not the remaining component.

It is further preferred that in step b2) only the organofluorine compound is liquefied in order to allow for a high purity of the organofluorine compound reclaimed. Thus, it is possible to reclaim the organofluorine without any contaminants, such as decomposition products, which might have been generated during operation of the apparatus.

Specifically, reclaiming is particularly straightforward in embodiments, in which the difference in the dew point of the organofluorine compound and the at least one further component, particularly the background gas or background gas component, is large.

The method of the present invention thus differs from the technology according to yet unpublished PCT/EP2014/060300 in that in step b1) the initial gas mixture is compressed before it is cooled in step b2).

Step b1) of the method according to the present invention is preferably carried out such that the temperature increase resulting from the compression does not reach the decomposition temperature of the organofluorine compound, leaving the integrity of the organofluorine compound unaffected, which further contributes to a high yield of the organofluorine compound reclaimed.

Specifically, in step b1) the initial gas mixture is preferably compressed up to a pressure in the range from 2 bar to 20 bar, more preferably from 5 bar to 10 bar, and most preferably to about 9 bar, since the temperature increase resulting from such pressures lies well below the decomposition temperature of the organofluorine compound.

In step b2) the initial gas mixture is preferably cooled down to a temperature below 0°C, preferably below -10°C, more preferably below -20°C, even more preferably below -30°C, and most preferably of about -38°C, thus allowing for a high reclaiming yield of the organofluorine compound from the compressed initial gas mixture. As mentioned above, standard cooling media, which fully comply with the pertinent safety requirements, can be used to reach these temperatures.

Given the fact that by the compression the initial gas mixture is heated, the initial gas mixture is preferably pre-cooled after step b1) and before step b2). Thus, the heating effect of the compression is at least partially compensated for by the pre-cooling, such that the initial gas mixture, which is subjected to the cooling step b2), has a temperature that is manageable for achieving liquefaction of the organofluorine compound, even if a condenser with moderate cooling efficiency is used.

According to a further preferred embodiment, the initial gas mixture is purified from liquid and/or solid impurities by a filter before being transferred to the separator, in which liquefaction and separation according to step b) and c) are performed. Thus, the risk of the separator being harmed by impurities, e.g. due to clogging, can efficiently be reduced.

According to a still further embodiment, the method comprises the further step of:
e) collecting the condensed organofluorine compound by an organofluorine compound collecting device.

Further embodiments comprise after step c) or optionally step d) and/or e) the further step of:
f) conveying the organfluorine compound to an organofluorine compound reservoir tank for being stored, as will be discussed in further detail below.

In embodiments, in order not to introduce into the insulation space of the electrical apparatus any impurities, such as decomposition products or residual water, the remaining gas or the background gas is preferably purified before being reintroduced into the insulation space. This contributes further to a safe operability of the apparatus.

In embodiments, heat, which is generated during compressing the initial gas mixture according to step b1), is used for heating the remaining gas prior to being reintroduced into the insulation space. This can be of particular relevance as the background gas is cooled during expansion when passing through the balancing valve, which might result in high-boiling residues, that are still contained in the background gas, to become liquid. This can efficiently be counteracted by using the compression heat generated upstream.

According to a further aspect, the present invention also relates to a substance reclaiming device for reclaiming at least one substance of an initial gas mixture contained in the insulation space of an electrical apparatus, the substance reclaiming device comprises a separator for separating an organofluorine compound from at least one remaining component of the initial gas mixture.

In analogy to the above description of the method of the present invention, the separator comprises a compressor in combination with a cooling device comprising a condenser for liquefying the organofluorine compound. Looking in direction of transfer of the initial gas mixture, the compressor is arranged upstream of the condenser and is designed to compress the initial gas mixture before it is transferred to the condenser.

As discussed above, the substance reclaiming device of the present invention allows a high yield of the reclaimed organofluorine compound to be achieved in a very simple, fast and economic manner. As also discussed above, the remaining gas can then be expanded again by means of a balancing valve and reintroduced into the insulation space of the apparatus.

The separator used according to the present invention generally functions in a manner to allow the obtained liquid organofluorine compound to flow or fall down, thus allowing to consolidate and collect liquid organofluorine compound. The separator is thus in any respect different from a filter through which the insulation gas is pumped and which requires the organofluorine compound to remain in gaseous phase.

In addition to what is taught in yet un-published international patent application No. PCT/EP2014/060300, the substance reclaiming device of the present invention comprises a compressor in combination with a cooling device comprising a condenser for liquefying the organofluorine compound, said compressor being arranged upstream of the condenser, when seen in direction of transfer of the initial gas mixture, and being designed to compress the initial gas mixture, before it is transferred to the condenser.

According to embodiments, the compressor is designed to compress the initial gas mixture up to a maximum pressure pₘₐₓ, said maximum pressure pₘₐₓ being chosen such that the maximum temperature Tₘₐₓ resulting from the compression lies below the decomposition temperature of the organofluorine compound. As discussed above, the compressing is in other words carried out such that the temperature increase resulting from the compression does not reach the decomposition temperature of the organofluorine compound, leaving the integrity of the organofluorine compound unaffected, which further contributes to a high yield of the organofluorine compound reclaimed. Preferably, the compressor is designed to compress the initial gas mixture up to a pressure in the range from 2 bar to 20 bar, more preferably from 5 bar to 10 bar, and most preferably to about 9 bar, in analogy to the above.

According to embodiments, the liquefaction device is specifically adapted for liquefying the organofluorine compound only. Thus, the pressure increase obtained by compressor and the temperature decrease obtained by cooling device are specifically adapted to liquefy the organofluorine compound only.

In further analogy to the above, the condenser is designed to cool the initial gas mixture down to a temperature below 0°C, preferably below -10°C, more preferably below -20°C, more preferably below -30°C, and most preferably of about -38°C, thus allowing for high reclaiming yield of the organofluorine compound from the compressed initial gas mixture. Thus, standard cooling media which fully comply with the pertinent safety requirements can be used to reach these temperatures.

In embodiments, the condenser further comprises a heating element to raise the temperature above 0°C. The temperature raise aims particularly at de-icing the condenser in case that any residual moisture in the initial gas mixture is detected, which, if left in the condenser, could lead to icing and ultimately to failure of the condenser.

Given the fact that by the compression the initial gas mixture is heated, it is particularly preferred that the cooling device further comprises a heat exchanger for pre-cooling the initial gas mixture before it is transferred to the condenser. As discussed above, the heating effect of the compression is thus at least partially compensated for by the pre-cooling, such that the initial gas mixture entering the condenser has a temperature that is manageable for achieving liquefaction, even if a condenser with moderate cooling efficiency is used. For pre-cooling the initial gas mixture, a plate heat exchanger is particularly preferred.

In embodiments, the substance reclaiming device additionally comprises an organofluorine compound collecting device for collecting the organofluorine compound separated by the separator. In further embodiments, the substance reclaiming device comprises at least one organofluorine compound reservoir tank for storing the organofluorine compound separated by the separator. Thus, the organofluorine compound is collected, e.g. by means of a vessel into which the liquid organofluorine compound falls or flows, and is ultimately directed to the organofluorine compound reservoir tank in which the organofluorine compound is held under storage conditions. In this regard, it is for example thinkable that the organofluorine compound collecting device is equipped with a float valve which, once a threshold amount of organofluorine compound is collected, activates a pump for transferring the organofluorine compound into the organofluorine compound reservoir tank. By storing only the organofluorine compound in its liquid form, much less space and much less sophisticated reservoir tanks are required compared to the case where the whole gas mixture including the background gas would have to be stored at high pressures.

In embodiments, the substance reclaiming device further comprises a filter designed such to remove solid or liquid impurities from the flow of the initial gas mixture before it enters the compressor. In particular, the filter can be allocated to a primary gas channel adapted to be connected to an outlet opening of the housing of the electrical apparatus by means of a connecting piece, as will be discussed below. By a pre-removal of solid or liquid impurities from the initial gas mixture prior to its entering into the compressor, the risk of clogging of the compressor, and ultimately of a failure of the substance reclaiming device, can efficiently be reduced.

According to embodiments, a flow of initial gas mixture out of the housing of the apparatus is generated by means of a suction force generated by the compressor. Additionally or alternatively, the substance reclaiming device can comprise a pump designed to purge the insulation space.

The substance reclaiming device is typically an individual device. It is preferably connected to the housing of an electrical apparatus, e.g. a transformer tank, once the insulation medium needs reconditioning.

Specifically, the substance reclaiming device comprises means for fluidly connecting the separator with the insulation space of the electrical apparatus. More specifically, the substance reclaiming device comprises a connecting piece for connecting it to the outlet opening of the housing and for receiving the initial gas mixture containing the substance(s) to be reclaimed. In particular, the substance reclaiming device further comprises a secondary connecting piece for connecting it to the inlet opening of the housing for allowing reintroducing the remaining gas, specifically via a balancing valve for reducing the pressure again to the pressure present in the insulation space.

In embodiments, at least one gas recycling channel branches off from the separator of the substance reclaiming device, the gas recycling channel being fluidly connected to a gas inlet opening arranged in the housing for reintroducing the remaining gas, in particular the background gas, into the insulation space. As mentioned, the remaining gas, and specifically the background gas, is at least essentially devoid of the organofluorine compound which has been separated off in the separator.

As mentioned, the substance reclaiming device can further comprise a balancing valve arranged downstream of the condenser, said balancing valve being designed to expand the remaining gas after the initial gas mixture has passed the condenser. In other words, the pressure of the remaining gas, specifically the background gas, is reduced before it is reintroduced into the insulation space. Thus, the relatively high pressure of the background gas resulting from the initial gas mixture having been compressed upstream in the process cycle is reduced, in particular to the pressure present in the insulation space, more particularly to a pressure between the partial pressure of the background gas and the initial total pressure, i.e. (e.g. in a gas-insulated transformer) between 0.8 bar and 1.3 bar absolute pressure.

In embodiments, a background gas treatment device is arranged upstream of the inlet opening, in particular for removing impurities from the background gas to be reintroduced into the insulation space. More particularly, the background gas treatment device is or comprises a zeolite able to adsorb the organofluorine compound or decomposition products thereof. This background gas treatment device is preferably linked to the gas recycling channel.

According to a still further aspect, the present invention further relates to an assembly of
A) an electrical apparatus for the generation, transmission, distribution and/or usage of electrical energy, and
B) a substance reclaiming device as described above.

The electrical apparatus comprises a housing enclosing an electrical apparatus interior space, at least a portion of said electrical apparatus interior space comprising at least one insulation space, in which an electrical component is arranged and which contains an insulation medium surrounding the electrical component.

In analogy to the description above, the insulation medium comprises an organofluorine compound and at least one further component in gaseous phase.

The substance reclaiming device is arranged downstream of the outlet opening, with regard to the direction of transfer of the initial gas mixture.

In further analogy to the disclosure above, an outlet opening for transferring an initial gas mixture out of the insulation space is arranged in the housing of the electrical apparatus, with the initial gas mixture containing the organofluorine compound and at least one further component of the insulation medium. As mentioned above, the initial gas mixture is preferably at least essentially identical to the insulation medium present in the insulation space at the time directly prior to reconditioning.

In order to reintroduce the background gas back into the insulation space after separating off the organofluorine compound, it is preferred that at least one gas recycling channel branches off from the separator of the substance reclaiming device, the gas recycling channel being fluidly connected to a gas inlet opening arranged in the housing for reintroducing the background gas of the initial gas mixture into the insulation space e.g. via a balancing valve, said background gas being at least essentially devoid of organofluorine compound. Specifically, said balancing valve is designed to expand the background gas before being reintroduced into the insulation space.

As mentioned above, a background gas treatment device can be arranged upstream of the gas inlet opening, in particular for purifying the background gas to be reintroduced into the insulation space, and more particularly is a zeolite able to adsorb the organofluorine compound or decomposition products thereof.

In embodiments, the organofluorine compound used according to the present invention has a boiling point higher than 0°C. Throughout this disclosure, the term "boiling point" relates to the standard boiling point, i.e. the temperature at which boiling occurs under a pressure of 1 bar.

According to embodiments, the organofluorine compound is selected from the group consisting of: fluoroethers, in particular hydrofluoromonoethers, fluoroketones, fluoroolefins, in particular hydrofluoroolefins, and fluoronitriles, in particular perfluoronitriles, as well as mixtures thereof, since these classes of compounds have been found to have very high insulation capabilities, in particular a high dielectric strength (or breakdown field strength) and at the same time a lower GWP and toxicity.

The invention encompasses both embodiments, in which the respective insulation medium comprises either one of a fluoroether, in particular a hydrofluoromonoether, a fluoroketone and a fluoroolefin, in particular a hydrofluoroolefin, and fluoronitriles, in particular perfluoronitriles, as well as embodiments in which it comprises a mixture of at least two of these compounds.

The background gas is preferably selected from the group consisting of: air, an air component, nitrogen, oxygen, carbon dioxide, a nitrogen oxide and mixtures thereof. Thus, at least one of the remaining components of the initial gas mixture, i.e. the initial gas mixture without the organofluorine compound, is preferably selected from the group consisting of: air, an air component, nitrogen, oxygen, carbon dioxide, a nitrogen oxide and mixtures thereof.

The term "fluoroether" as used in the context of the present invention encompasses both perfluoroethers, i.e. fully fluorinated ethers, and hydrofluoroethers, i.e. ethers that are only partially fluorinated. The term "fluoroether" further encompasses saturated compounds as well as unsaturated compounds, i.e. compounds including double and/or triple bonds between carbon atoms. The at least partially fluorinated alkyl chains attached to the oxygen atom of the fluoroether can, independently of each other, be linear or branched.

The term "fluoroether" further encompasses both non-cyclic and cyclic ethers. Thus, the two alkyl chains attached to the oxygen atom can optionally form a ring. In particular, the term encompasses fluorooxiranes. In a specific embodiment, the organofluorine compound according to the present invention is a perfluorooxirane or a hydrofluorooxirane, more specifically a perfluorooxirane or hydrofluorooxirane comprising from three to fifteen carbon atoms.

In embodiments, the respective insulation medium comprises a hydrofluoromonoether containing at least three carbon atoms. Apart from their high dielectric strength, these hydrofluoromonoethers are chemically and thermally stable up to temperatures above 140°C. They are further non-toxic or have a low toxicity level. In addition, they are non-corrosive and non-explosive.

The term "hydrofluoromonoether" as used herein refers to a compound having one and only one ether group, said ether group linking two alkyl groups, which can be, independently from each other, linear or branched, and which can optionally form a ring. The compound is thus in clear contrast to the compounds disclosed in e.g. US-B-7128133, which relates to the use of compounds containing two ether groups, i.e. hydrofluorodiethers, in heat-transfer fluids. The term "hydrofluoromonoether" as used herein is further to be understood such that the monoether is partially hydrogenated and partially fluorinated. It is further to be understood such that it may comprise a mixture of differently structured hydrofluoromonoethers. The term "structurally different" shall broadly encompass any difference in sum formula or structural formula of the hydrofluoromonoether.

As mentioned above, hydrofluoromonoethers containing at least three carbon atoms have been found to have a relatively high dielectric strength. Specifically, the ratio of the dielectric strength of the hydrofluoromonoethers according to the present invention to the dielectric strength of SF₆ is greater than about 0.4.

As also mentioned, the GWP of the hydrofluoromonoethers is low. Preferably, the GWP is less than 1'000 over 100 years, more specifically less than 700 over 100 years. The hydrofluoromonoethers mentioned herein have a relatively low atmospheric lifetime and in addition are devoid of halogen atoms that play a role in the ozone destruction catalytic cycle, namely Cl, Br or I. Their Ozone Depletion Potential (ODP) is zero, which is very favourable from an environmental perspective.

The preference for a hydrofluoromonoether containing at least three carbon atoms and thus having a relatively high boiling point of more than -20°C is based on the finding that a higher boiling point of the hydrofluoromonoether generally goes along with a higher dielectric strength.

According to other embodiments, the hydrofluoromonoether contains exactly three or four or five or six carbon atoms, in particular exactly three or four carbon atoms, most preferably exactly three carbon atoms. More particularly, the hydrofluoromonoether is thus at least one compound selected from the group consisting of the compounds defined by the following structural formulae in which a part of the hydrogen atoms is each substituted by a fluorine atom:

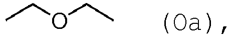

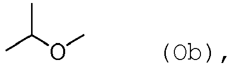

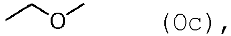

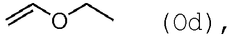

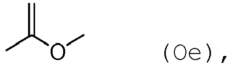

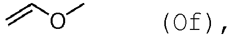

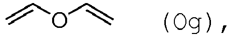

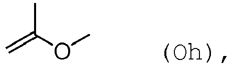

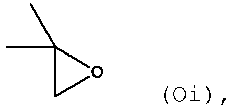

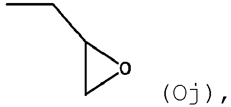

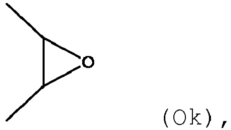

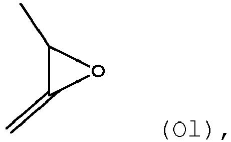

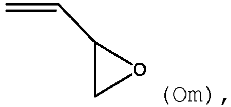

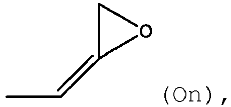

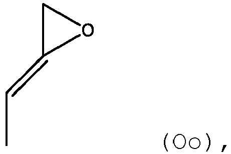

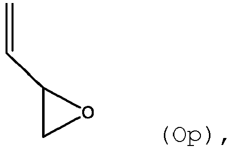

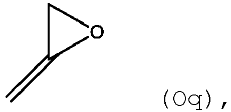

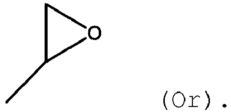

By using a hydrofluoromonoether containing three or four carbon atoms, no liquefaction occurs under typical operational conditions of the apparatus. Thus, a dielectric insulation fluid, every component of which is in the gaseous state at operational conditions of the apparatus, can be achieved. Nevertheless, the boiling point of this hydrofluoromonoether is still high enough to allow liquefaction by means of the liquefaction device of the present invention.

Considering flammability of the compounds, it is further advantageous that the ratio of the number of fluorine atoms to the total number of fluorine and hydrogen atoms, here briefly called "F-rate", of the hydrofluoromonoether is at least 5:8. It has been found that compounds falling within this definition are generally non-flammable and thus result in an insulation medium complying with highest safety requirements. Thus, safety requirements of the electrical insulator and the method of its production can readily be fulfilled by using a corresponding hydrofluoromonoether.

According to other embodiments, the ratio of the number of fluorine atoms to the number of carbon atoms, here briefly called "F/C-ratio", ranges from 1.5:1 to 2:1. Such compounds generally have a GWP of less than 1'000 over 100 years and are thus very environment-friendly. It is particularly preferred that the hydrofluoromonoether has a GWP of less than 700 over 100 years.

According to other embodiments of the present invention, the hydrofluoromonoether has the general structure (O)

CₐH_{b}F_{c}-O-C_{d}HₑF_{f} (O)

wherein a and d independently are an integer from 1 to 3 with a + d = 3 or 4 or 5 or 6, in particular 3 or 4, b and c independently are an integer from 0 to 11, in particular 0 to 7, with b + c = 2a + 1, and e and f independently are an integer from 0 to 11, in particular 0 to 7, with e + f = 2d + 1, with further at least one of b and e being 1 or greater and at least one of c and f being 1 or greater.

It is thereby a preferred embodiment that in the general structure or formula (O) of the hydrofluoromonoether: a is 1, b and c independently are an integer ranging from 0 to 3 with b + c = 3, d = 2, e and f independently are an integer ranging from 0 to 5 with e + f = 5, with further at least one of b and e being 1 or greater and at least one of c and f being 1 or greater.

According to a more particular embodiment, exactly one of c and f in the general structure (O) is 0. The corresponding grouping of fluorines on one side of the ether linkage, with the other side remaining unsubstituted, is called "segregation". Segregation has been found to reduce the boiling point compared to unsegregated compounds of the same chain length.

Most preferably, the hydrofluoromonoether is selected from the group consisting of pentafluoro-ethyl-methyl ether (CH₃-O-CF₂CF₃) and 2,2,2-trifluoroethyl-trifluoromethyl ether (CF₃-O-CH₂CF₃) .

Pentafluoro-ethyl-methyl ether has a boiling point of +5.25°C and a GWP of 697 over 100 years, the F-rate being 0.625, while 2,2,2-trifluoroethyl-trifluoromethyl ether has a boiling point of +11°C and a GWP of 487 over 100 years, the F-rate being 0.75. They both have an ODP of 0 and are thus environmentally fully acceptable.

In addition, pentafluoro-ethyl-methyl ether has been found to be thermally stable at a temperature of 175°C for 30 days and therefore to be fully suitable for the operational conditions given in the apparatus. Since thermal stability studies of hydrofluoromonoethers of higher molecular weight have shown that ethers containing fully hydrogenated methyl or ethyl groups have a lower thermal stability compared to those having partially hydrogenated groups, it can be assumed that the thermal stability of 2,2,2-trifluoroethyl-trifluoromethyl ether is even higher.

Hydrofluoromonoethers in general, and pentafluoro-ethyl-methyl ether as well as 2,2,2-trifluoroethyl-trifluoromethyl ether in particular, display a low risk of human toxicity. This can be concluded from the available results of mammalian HFC (hydrofluorocarbon) tests. Also, information available on commercial hydrofluoromonoethers do not give any evidence of carcinogenicity, mutagenicity, reproductive or developmental effects and other chronic effects of the compounds of the present application.

Based on the data available for commercial hydrofluoro ethers of higher molecular weight, it can be concluded that the hydrofluoromonoethers, and in particular pentafluoro-ethyl-methyl ether as well as 2,2,2-trifluoroethyl-trifluoromethyl ether, have a lethal concentration LC 50 of higher than 10'000 ppm, rendering them suitable also from a toxicological point of view.

The hydrofluoromonoethers mentioned have a higher dielectric strength than air. In particular, pentafluoro-ethyl-methyl ether at 1 bar has a dielectric strength about 2.4 times higher than that of air at 1 bar.

Given its boiling point, which is preferably below 55°C, more preferably below 40°C, in particular below 30°C, the hydrofluoromonoethers mentioned, particularly pentafluoro-ethyl-methyl ether and 2,2,2-trifluoroethyl-trifluoromethyl ether, respectively, are normally in the gaseous state at operational conditions. Thus, an insulation medium in which every component is in the gaseous state at operational conditions of the apparatus can be achieved, which is advantageous.

Alternatively or additionally to the hydrofluoromonoethers mentioned above, the respective insulation medium comprises a fluoroketone containing from four to twelve carbon atoms.

The term "fluoroketone" as used in this application shall be interpreted broadly and shall encompass both perfluoroketones and hydrofluoroketones, and shall further encompass both saturated compounds and unsaturated compounds, i.e. compounds including double and/or triple bonds between carbon atoms. The at least partially fluorinated alkyl chain of the fluoroketones can be linear or branched, or can form a ring, which optionally is substituted by one or more alkyl groups. In exemplary embodiments, the fluoroketone is a perfluoroketone. In further exemplary embodiment, the fluoroketone has a branched alkyl chain, in particular an at least partially fluorinated alkyl chain. In still further exemplary embodiments, the fluoroketone is a fully saturated compound.

According to another aspect, the insulation medium according to the present invention can comprise a fluoroketone having from 4 to 12 carbon atoms, the at least partially fluorinated alkyl chain of the fluoroketone forming a ring, which is optionally substituted by one or more alkyl groups.

It is particularly preferred that the insulation medium comprises a fluoroketone containing exactly five or exactly six carbon atoms or mixtures thereof. Compared to fluoroketones having a greater chain length with more than six carbon atoms, fluoroketones containing five or six carbon atoms have the advantage of a relatively low boiling point, allowing to avoid liquefaction under operational conditions. Nevertheless, the boiling point of this fluoroketone is still high enough to allow liquefaction by means of the liquefaction device of the present invention.

According to embodiments, the fluoroketone is at least one compound selected from the group consisting of the compounds defined by the following structural formulae in which at least one hydrogen atom is substituted with a fluorine atom:

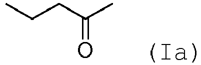

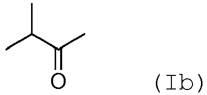

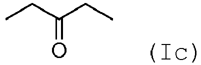

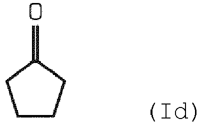

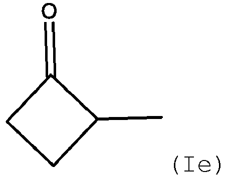

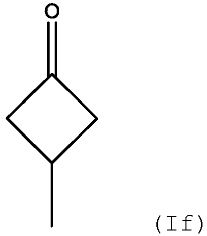

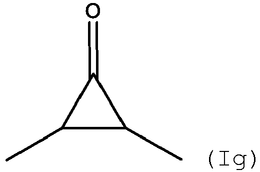

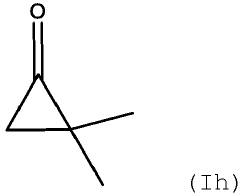

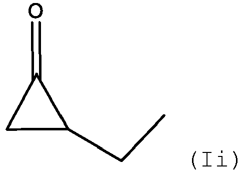

Fluoroketones containing five or more carbon atoms are further advantageous, because they are generally non-toxic with outstanding margins for human safety. This is in contrast to fluoroketones having less than four carbon atoms, such as hexafluoroacetone (or hexafluoropropanone), which are toxic and very reactive. In particular, fluoroketones containing exactly five carbon atoms, herein briefly named fluoroketones a), and fluoroketones containing exactly six carbon atoms are thermally stable up to 500°C.

According to a specific embodiment, the insulation medium according to the present invention, in particular comprising a fluoroketone having exactly 5 carbon atoms, can further comprise a background gas, in particular selected from the group consisting of: air, air component, nitrogen, oxygen, carbon dioxide, a nitrogen oxide (including but not limited to NO₂, NO, N₂O), and mixtures thereof.

In embodiments of this invention, the fluoroketones, in particular fluoroketones a), having a branched alkyl chain are preferred, because their boiling points are lower than the boiling points of the corresponding compounds (i.e. compounds with same molecular formula) having a straight alkyl chain.

According to embodiments, the fluoroketone a) is a perfluoroketone, in particular has the molecular formula C₅F₁₀O, i.e. is fully saturated without double or triple bonds between carbon atoms. The fluoroketone a) may preferably be selected from the group consisting of 1,1,1,3,4,4,4-heptafluoro-3-(trifluoromethyl)butan-2-one (also named decafluoro-2-methylbutan-3-one), 1,1,1,3,3,4,4,5,5,5-decafluoropentan-2-one, 1,1,1,2,2,4,4,5,5,5-decafluoropentan-3-one and octafluorocylcopentanone, and most preferably is 1,1,1,3,4,4,4-heptafluoro-3-(trifluoromethyl)butan-2-one.
1,1,1,3,4,4,4-heptafluoro-3-(trifluoromethyl)butan-2-one can be represented by the following structural formula (I): 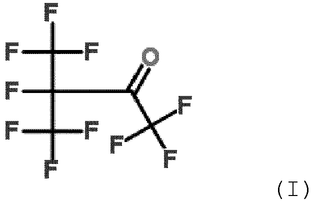 1,1,1,3,4,4,4-heptafluoro-3-(trifluoromethyl)butan-2-one, here briefly called "C5-ketone", with molecular formula CF₃C(O)CF(CF₃)₂ or C₅F₁₀O, has been found to be particularly preferred for high and medium voltage insulation applications, because it has the advantages of high dielectric insulation performance, in particular in mixtures with a dielectric carrier gas, has very low GWP and has a low boiling point. It has an ODP of 0 and is practically non-toxic.

According to embodiments, even higher insulation capabilities can be achieved by combining the mixture of different fluoroketone components. In embodiments, a fluoroketone containing exactly five carbon atoms, as described above and here briefly called fluoroketone a), and a fluoroketone containing exactly six carbon atoms or exactly seven carbon atoms, here briefly named fluoroketone c), can favourably be part of the dielectric insulation at the same time. Thus, an insulation medium can be achieved having more than one fluoroketone, each contributing by itself to the dielectric strength of the insulation medium.

In embodiments, the further fluoroketone c) is at least one compound selected from the group consisting of the compounds defined by the following structural formulae in which at least one hydrogen atom is substituted with a fluorine atom: 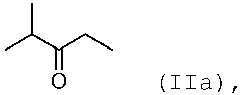 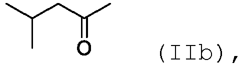 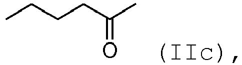 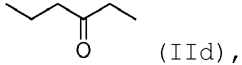 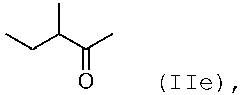 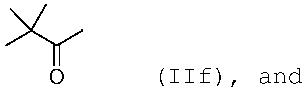 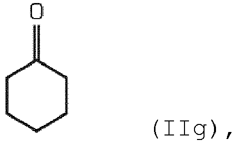 as well as any fluoroketone having exactly 6 carbon atoms, in which the at least partially fluorinated alkyl chain of the fluoroketone forms a ring, which is substituted by one or more alkyl groups (IIh);
and/or is at least one compound selected from the group consisting of the compounds defined by the following structural formulae in which at least one hydrogen atom is substituted with a fluorine atom: 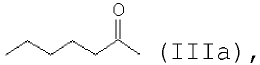 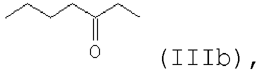 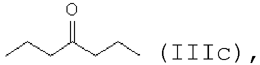 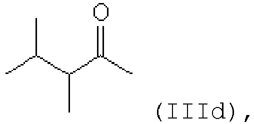 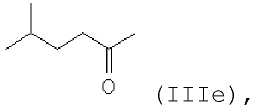 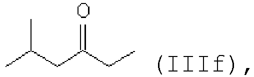 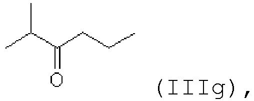 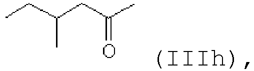 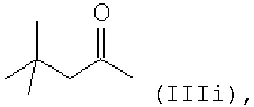 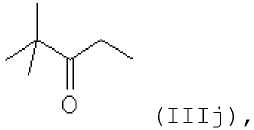 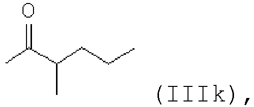 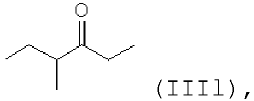 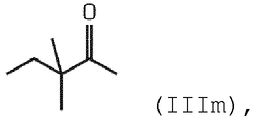 and 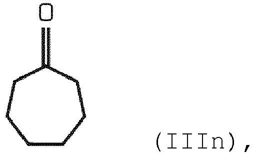 in particular dodecafluoro-cycloheptanone,
as well as any fluoroketone having exactly 7 carbon atoms, in which the at least partially fluorinated alkyl chain of the fluoroketone forms a ring, which is substituted by one or more alkyl groups (IIIo).

The present invention encompasses each compound or each combination of compounds selected from the group consisting of the compounds according to structural formulae (Ia) to (Ii), (IIa) to (IIh), (IIIa) to (IIIo), and mixtures thereof.

According to another aspect, the insulation medium according to the present invention can comprise a fluoroketone having exactly 6 carbon atoms, in which the at least partially fluorinated alkyl chain of the fluoroketone forms a ring, optionally substituted by one or more alkyl groups.

As mentioned, such insulation medium can comprise a background gas, in particular selected from the group consisting of: air, air component, nitrogen, oxygen, carbon dioxide, a nitrogen oxide (including but not limited to NO₂, NO, N₂O), and mixtures thereof. Furthermore, an electrical apparatus comprising such an insulation medium is disclosed.

According to still another aspect, the insulation medium according to the present invention can comprise a fluoroketone having exactly 7 carbon atoms, in which the at least partially fluorinated alkyl chain of the fluoroketone forms a ring, optionally substituted by one or more alkyl groups. Furthermore, such an insulation medium can comprise a background gas, as mentioned above, in particular selected from the group consisting of: air, air component, nitrogen, oxygen, carbon dioxide, a nitrogen oxide (including but not limited to NO₂, NO, N₂O), and mixtures thereof. Furthermore, an electrical apparatus comprising such a dielectric insulation fluid is disclosed.

The insulation medium according to the present invention encompasses any insulation medium comprising each compound or each combination of compounds selected from the group consisting of the compounds according to structural formulae (Ia) to (Ii), (IIa) to (IIh), (IIIa) to (IIIo), and mixtures thereof, and with the insulation medium further comprising a background gas, in particular selected from the group consisting of: air, air component, nitrogen, oxygen, carbon dioxide, a nitrogen oxide (including but not limited to NO₂, NO, N₂O), and mixtures thereof. Furthermore, an electrical apparatus comprising such an insulation medium is disclosed.

Depending on the specific application of the electrical component of the apparatus of the present invention, a fluoroketone containing exactly six carbon atoms (falling under the designation "fluoroketone c)" mentioned above) may be preferred for the respective insulation space compartment; such a fluoroketone is non-toxic, with outstanding margins for human safety.

In embodiments, fluoroketone c), alike fluoroketone a), is a perfluoroketone, and/or has a branched alkyl chain, in particular an at least partially fluorinated alkyl chain, and/or the fluoroketone c) contains fully saturated compounds. In particular, the fluoroketone c) has the molecular formula C₆F₁₂O, i.e. is fully saturated without double or triple bonds between carbon atoms. More preferably, the fluoroketone c) can be selected from the group consisting of 1,1,1,2,4,4,5,5,5-nonafluoro-2-(trifluoromethyl)pentan-3-one (also named dodecafluoro-2-methylpentan-3-one), 1,1,1,3,3,4,5,5,5-nonafluoro-4-(trifluoromethyl)pentan-2-one (also named dodecafluoro-4-methylpentan-2-one), 1,1,1,3,4,4,5,5,5-nonafluoro-3-(trifluoromethyl)pentan-2-one (also named dodecafluoro-3-methylpentan-2-one), 1,1,1,4,4,4-hexafluoro-3,3-bis-(trifluoromethyl)butan-2-one (also named dodecafluoro-3,3-(dimethyl)butan-2-one), dodecafluorohexan-2-one, dodecafluorohexan-3-one and decafluorocyclohexanone (with sum formula C₆F₁₀O) , and particularly is the mentioned 1,1,1,2,4,4,5,5,5-nonafluoro-2-(trifluoromethyl)pentan-3-one.
1,1,1,2,4,4,5,5,5-Nonafluoro-2-(trifluoromethyl)pentan-3-one (also named dodecafluoro-2-methylpentan-3-one) can be represented by the following structural formula (II): 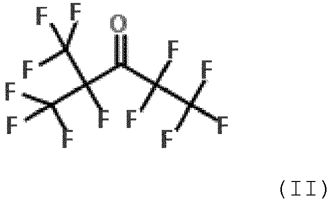 1,1,1,2,4,4,5,5,5-Nonafluoro-4-(trifluoromethyl)pentan-3-one (here briefly called "C6-ketone", with molecular formula C₂F₅C(O)CF(CF₃)₂) has been found to be particularly preferred for high voltage insulation applications because of its high insulating properties and its extremely low GWP. Specifically, its pressure-reduced breakdown field strength is around 240 kV/(cm*bar) , which is much higher than the one of air having a much lower dielectric strength (E_{cr} = 25 kV/(cm*bar). It has an ozone depletion potential of 0 and is non-toxic. Thus, the environmental impact is much lower than when using SF₆, and at the same time outstanding margins for human safety are achieved.

As mentioned above, the organofluorine compound can also be a fluoroolefin, in particular a hydrofluoroolefin. More particularly, the fluoroolefin or hydrofluorolefin contains exactly three carbon atoms.

According to an embodiment, the hydrofluoroolefin is thus selected from the group consisting of: 1,1,1,2-tetrafluoropropene (HFO-1234yf), 1,2,3,3-tetrafluoro-2-propene (HFO-1234yc), 1,1,3,3-tetrafluoro-2-propene (HFO-1234zc), 1,1,1,3-tetrafluoro-2-propene (HFO-1234ze), 1,1,2,3-tetrafluoro-2-propene (HFO-1234ye), 1,1,1,2,3-pentafluoropropene (HFO-1225ye), 1,1,2,3,3-pentafluoropropene (HFO-1225yc), 1,1,1,3,3-pentafluoropropene (HFO-1225zc), (Z)1,1,1,3-tetrafluoropropene (HFO-1234zeZ), (Z)1,1,2,3-tetrafluoro-2-propene (HFO-1234yeZ), (E)1,1,1,3-tetrafluoropropene (HFO-1234zeE), (E)1,1,2,3-tetrafluoro-2-propene (HFO-1234yeE), (Z)1,1,1,2,3-pentafluoropropene (HFO-1225yeZ), (E)1,1,1,2,3-pentafluoropropene (HFO-1225yeE) and combinations thereof.

As mentioned above, the organofluorine compound can also be a fluoronitrile, in particular a perfluoronitrile. In particular, the organofluorine compound can be a fluoronitrile, specifically a perfluoronitrile, containing two carbon atoms, three carbon atoms or four carbon atoms.

More particularly, the fluoronitrile can be a perfluoroalkylnitrile, specifically perfluoroacetonitrile, perfluoropropionitrile (C₂F₅CN) and/or perfluorobutyronitrile (C₃F₇CN).

Most particularly, the fluoronitrile can be perfluoroisobutyronitrile (according to the formula (CF₃)₂CFCN) and/or perfluoro-2-methoxypropanenitrile (according to the formula CF₃CF(OCF₃)CN). Of these, perfluoroisobutyronitrile is particularly preferred due to its low toxicity.

Preferably, the electrical apparatus of the present invention or the electrical component thereof is a high voltage or medium voltage apparatus, or is a high voltage or medium voltage component, respectively.

Specifically, the electrical apparatus is selected from the group consisting of: a switchgear, in particular a gas-insulated switchgear (GIS), or a part and/or component thereof, a busbar, a bushing, a cable, a gas-insulated cable, a cable joint, a gas-insulated line (GIL), a transformer, a current transformer, a voltage transformer, a surge arrester, an earthing switch, a disconnector, a combined disconnector and earthing switch, a load-break switch, a circuit breaker, any type of gas-insulated switch, a high voltage apparatus, a medium voltage apparatus, a low voltage apparatus, a direct-current apparatus, an air-insulated insulator, a gas-insulated metal-encapsulated insulator, sensors, a capacitor, an inductance, a resistor, a current limiter, a high voltage switch, a gas circuit breaker, a vacuum circuit breaker, a generator circuit breaker, a medium voltage switch, a ring main unit, a recloser, a sectionalizer, a low voltage switch, a distribution transformer, a power transformer, a tap changer, a transformer bushing, a power semiconductor device, a power converter, a converter station, a convertor building, a computing machine, and components and/or combinations of such devices.

According to a particularly preferred embodiment, the electrical apparatus is a transformer with the transformer tank forming the housing of the apparatus.

According to a further embodiment, the remaining gas or a portion thereof is reintroduced back into the insulation space separately from any other component to be reintroduced, in particular from any organofluorine compound to be reintroduced. According to this embodiment, there is prior to the reintroduction no mixing of the remaining gas with the separated organofluorine compound.

According to a still further embodiment, only the remaining gas is reintroduced back into the insulation space. According to this embodiment, the organofluorine compound separated from the remaining gas in step c) is not reintroduced into the insulation space.

According to these specific features of the process of the present invention, the electrical apparatus of the present invention comprises a gas recycling channel designed to be fluidly connected to a gas inlet opening arranged in the housing for reintroducing the remaining gas into the insulation space. Specifically, said gas recycling channel is preferably devoid of any inlet connection for the supply of the separated organofluorine compound.

The electrical apparatus according to these embodiments is therefore in even clearer distinction from the teaching of US 5,701,761 according to which a low-temperature mixture of a light fluid mainly consisting of a vapour phase is mixed with a heavy fluid mainly consisting of a liquid phase, where said mixture is then used in a device for the cooling of natural gas.

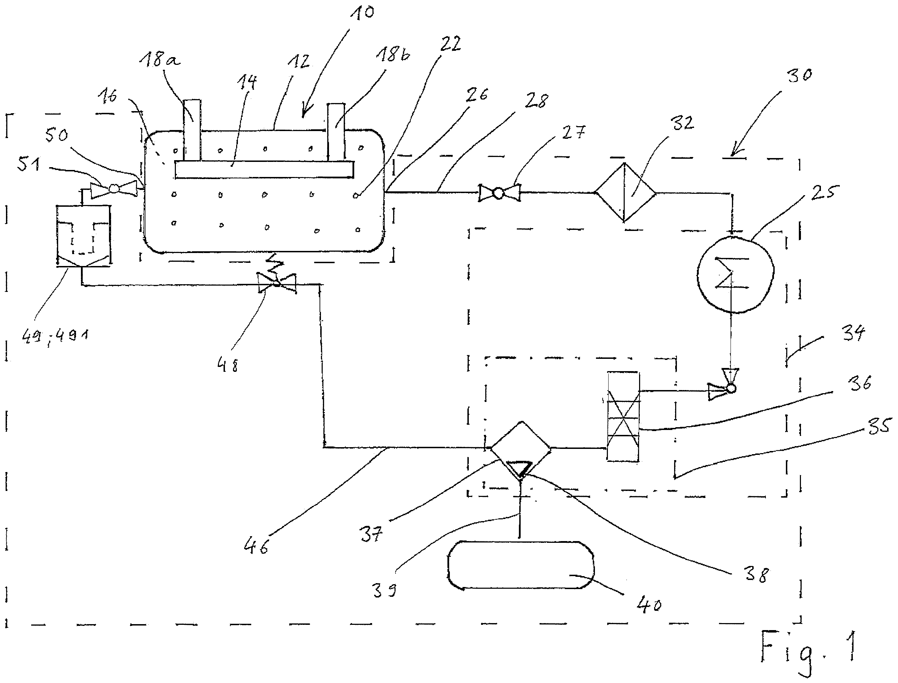

The present invention is further illustrated by way of the attached
- Fig. 1: showing schematically an assembly comprising an electrical apparatus and a substance reclaiming device according to an exemplary embodiment of the present invention.

As shown in Fig. 1, the electrical apparatus 10 of the assembly according to the present invention comprises a housing 12 enclosing an electrical apparatus interior space.

The electrical apparatus interior space forms or comprises an insulation space 16, in which an electrical component 14 is arranged. The electrical component 14 can for example be connected to respective conductors 18a, 18b which are insulated from the material of the housing 12 by means of respective bushings. The electrical component 14 is surrounded by an insulation medium 22 which comprises an organofluorine compound and a background gas and hence separates and electrically insulates the housing 12 from the electrical component 14.

In the housing 12, an outlet opening 26 is arranged for transferring an initial gas mixture out of the insulation space 16. The initial gas mixture contains the organofluorine compound and at least one further component. This further component can in particular be the background gas or a background gas component, but can also be a decomposition product generated from the organofluorine compound.

The apparatus 10 further comprises a substance reclaiming device 30. The substance reclaiming device 30 is linked to the housing 12 by means of respective connecting pieces (not shown) . The outlet opening 26 opens out into a primary gas channel 28 of the substance reclaiming device 30. The primary gas channel 28 fluidly connects the insulation space 16 with a separator 34 of the substance reclaiming device 30, said separator 34 being intended to separate the organofluorine compound from the at least one remaining component of the initial gas mixture, specifically from the background gas.

Between the outlet opening 26 and the separator 34, a filter 32 can be arranged, which is designed such to remove solid or liquid impurities from the flow of the initial mixture prior to entering the separator 34.

The separator 34 comprises the compressor 25 mentioned above which apart from functioning as flow generating device is designed for compressing the initial gas mixture. The separator 34 further comprises a cooling device 35 fluidically connected with and located downstream of the compressor 25.

The cooling device 35 comprises a heat exchanger 36 and a condenser 37. The heat exchanger 36 is fluidically connected to the condenser 37 and is intended to pre-cool the initial gas mixture heated as a result of the compression in the compressor 25 before it is transferred to the condenser 37.

In the separator 34, the liquefied organofluorine compound is separated from the remaining gas containing the background gas of the insulation medium by phase separation. For collecting the organofluorine compound separated by the separator 34, the separator 34 further comprise an organofluorine compound collecting device 38. The organofluorine compound collecting device 38 can e.g. be in the form of a funnel, as schematically indicated in Fig. 1, and leads in the embodiment shown to an organofluorine compound reservoir tank 40 for storing the organofluorine compound.

From the separator 34 of the substance reclaiming device 30, a gas recycling channel 46 branches off. The gas recycling channel 46 is designed to guide the background gas, which at this stage contains only minor amounts of the organofluorine compound, to a gas inlet opening 50 arranged in the housing 12 for reintroducing the background gas into the insulation space 16. For this purpose, a balancing valve 48 is allocated to the separator 34 designed to expand the remaining gas. Downstream of the expansion valve 48 and upstream of the gas inlet opening 50 a background gas treatment device 49 in the form of a secondary filter 491 is arranged for purifying the background gas before it is reintroduced into the insulation space 16, thereby closing the recycling cycle.

In more concrete terms, the specific embodiment according to Fig. 1 relates to an electrical apparatus 10, the insulating space 16 of which has a volume of about 20 m³ and contains an insulation medium comprising 1,1,1,3,4,4,4-heptafluoro-3-(trifluoromethyl)butan-2-one ("C5-ketone") in mixture with air. The total filling pressure is about 1.2 bar at 20°C with the content of C5-ketone being about 30%. Thus, the partial pressure of C5-ketone inside the housing is about 360 mbar.

By means of the compressor 25, a flow of the initial gas mixture is generated by suction, the gas flow entering the primary gas channel 28 and being regulated by means of a valve 27 allocated to the primary gas channel 28. The initial gas mixture thus corresponds to the insulation medium 22 present in the insulation space 16 at the time directly before refurbishment. During the refurbishment, the pressure in the insulation space 16 is reduced to a pressure of about 850 mbar.

The extracted initial gas mixture passes the filter 32, which is arranged downstream of the valve 27, before it enters the compressor 25. By means of the compressor 25, the gas is compressed, in the specific case to a pressure of about 7.4 bar. Thus, the partial pressure of C5-ketone is increased to 2.2 bar at this stage, i.e. at the beginning of the reclaiming process.

From there, the compressed initial gas mixture is transferred to the heat exchanger 36 by means of which the compressed gas is pre-cooled to moderate temperatures, i.e. to about ambient temperature. Thus, the temperature increase due to adiabatic compression of the initial gas mixture is at least partly compensated by the heat exchanger 36.

The pre-cooled initial gas mixture is then transferred to the condenser 37 for liquefying the organofluorine compound. The condenser is designed to actively cool the initial gas mixture according to the principles of a cold trap. Ideally, cooling of the initial gas mixture down to a temperature of about -38°C is thereby achieved. At -38°C, only around 40 mbar of the C5-ketone contained in the compressed gas stays in gaseous phase, if a perfect heat transfer is achieved. In other words, the partial pressure of the C5-ketone is reduced by about 2.16 mbar because about 97% of the C5-ketone vapour liquefies under optimal conditions. The liquefied C5-ketone is collected by the organofluorine compound collecting device 38 and then transferred via an organofluorine compound storing line 39 to a reservoir tank 40 for storing.

The background gas, which after having passed the condenser 37 is at least approximately devoid of organofluorine compound, is guided into the gas recycling channel 46 and is expanded by means of the balancing valve 48 to the pressure present in the insulation space 16. Prior to entering the insulation space, the background gas is guided through another valve 51 to regulate the gas recycling flow.

### List of reference numerals

- 10: electrical apparatus
- 12: housing
- 14: electrical component
- 16: insulation space
- 18a, 18b: conductors
- 22: insulation medium
- 25: compressor
- 26: outlet opening
- 27: valve allocated to primary gas channel
- 28: primary gas channel
- 30: substance reclaiming device
- 32: filter
- 34: separator
- 35: cooling device
- 36: heat exchanger
- 37: condenser
- 38: organofluorine compound collecting device
- 39: organofluorine compound storing line
- 40: organofluorine compound reservoir tank
- 46: gas recycling channel
- 48: expansion valve, balancing valve
- 49; 491: background gas treatment device; secondary filter
- 50: gas inlet opening for reintroducing background gas
- 51: valve allocated to gas recycling channel

## Claims

1. Method for reclaiming at least one substance from an insulation medium (22) of an electrical apparatus (10) for the generation, transmission, distribution and/or usage of electrical energy, the insulation medium (22) comprising an organofluorine compound and at least one further component in gaseous phase, the method comprising the subsequent steps of:
a) transferring an initial gas mixture containing the organofluorine compound and at least one further component of the insulation medium (22) out of an insulation space (16) of the electrical apparatus (10) into a substance reclaiming device (30),
b) liquefying the organofluorine compound in the substance reclaiming device (30) by
b1) compressing the initial gas mixture, and
b2) cooling the compressed initial gas mixture down to a temperature at which the organofluorine compound liquefies,
c) separating the liquefied organofluorine compound from the remaining gas comprising the at least one remaining component of the initial gas mixture.

2. Method according to claim 1, further comprising
d) expanding the remaining gas via a balancing valve (48) and reintroducing at least a portion of the remaining gas back into the insulation space (16).

3. Method according to any one of the preceding claims, wherein in step b), only the organofluorine compound is liquefied,
wherein step b1) is preferably carried out such that the temperature increase resulting from the compression does not reach a decomposition temperature of the organofluorine compound, leaving the integrity of the organofluorine compound unaffected; and/or
wherein in step b1) the initial gas mixture is compressed up to a pressure in the range from 2 bar to 20 bar, preferably from 5 bar to 10 bar, and most preferably to about 9 bar; and/or
wherein in step b2) the initial gas mixture is cooled down to a temperature below 0°C, preferably below -10°C, more preferably below -20°C, even more preferably below -30°C, and most preferably of about -38°C; and/or
wherein after step b1) and before step b2) the initial gas mixture is pre-cooled.

4. Method according to any one of the preceding claims, wherein the initial gas mixture is purified from liquid and/or solid impurities by a filter (32) before being transferred to a separator (34) of the substance reclaiming device (30); and/or
wherein after step c), the method comprises the further step of:
e) collecting the liquefied organofluorine compound by an organofluorine compound collecting device (38) of the reclaiming device (30); and/or
wherein after step c) or optionally after step d) and/or e), the method comprises the further step of:
f) conveying the organfluorine compound to an organofluorine compound reservoir tank (40) of the substance reclaiming device (30) for being stored.

5. Method according to any one of the preceding claims,
wherein the initial gas mixture is transferred by purging the insulation space (16), thereby forcing the initial gas mixture out of the insulation space (16); and/or
wherein the remaining gas is purified before being reintroduced into the insulation space (16); and/or
wherein heat, which is generated during compressing the initial gas mixture according to step b1), is used for heating the remaining gas prior to being reintroduced into the insulation space (16).

6. Method according to any one of the preceding claims,
wherein the remaining gas or a portion thereof is reintroduced back into the insulation space separately from any other component to be reintroduced, in particular from any organofluorine compound to be reintroduced, or
wherein only the remaining gas is reintroduced back into the insulation space.

7. Method according to any one of the preceding claims, wherein the remaining gas or a portion thereof is released into the atmosphere, in particular wherein the remaining gas is non-hazardous to the environment.

8. Substance reclaiming device (30), in particular for implementing the method of any one of the preceding claims, for reclaiming at least one substance of an initial gas mixture contained in the insulation space (16) of an electrical apparatus (10), the initial gas mixture containing an organofluorine compound and at least one further component, the substance reclaiming device (30) comprising a separator (34) for separating an organofluorine compound from at least one remaining component of the initial gas mixture, said separator (34) comprising a compressor (25) in combination with a cooling device (35) comprising a condenser (37) for liquefying the organofluorine compound, said compressor (25) being arranged upstream of the condenser (37), when seen in direction of transfer of the initial gas mixture from the electrical apparatus (10) to the substance reclaiming device (30), and being designed to compress the initial gas mixture before it is transferred to the condenser (37), the substance reclaiming device (30) comprising a gas recycling channel (46) designed to be fluidly connected to a gas inlet opening arranged in a housing (12) of the electrical apparatus (10) for reintroducing the remaining gas into the insulation space (16).

9. Substance reclaiming device (30) according to claim 8,
wherein said gas recycling channel (46) is devoid of any inlet connection for the supply of the separated organofluorine compound ; and/or
wherein the reclaiming device (30) comprises means (26, 28; 50) for fluidly connecting the separator (34) with the insulation space (16) of the electrical apparatus (10); and/or
wherein the substance reclaiming device (30) further comprises a balancing valve (48), which is arranged downstream of the condenser (37), when seen in direction of transfer of the initial gas mixture from the substance reclaiming device (30) to the electrical apparatus (10), and is designed to expand the remaining gas after the initial gas mixture has passed the condenser (37); and/or
wherein the compressor (37) is designed to compress the initial gas mixture up to a maximum pressure pₘₐₓ, said maximum pressure pₘₐₓ being chosen such that the maximum temperature Tₘₐₓ resulting from the compression lies below the decomposition temperature of the organofluorine compound; and/or
wherein the compressor (25) is designed to compress the initial gas mixture up to a pressure in the range from 2 bar to 20 bar, preferably from 5 bar to 10 bar, and most preferably to about 9 bar; and/or
wherein the condenser (37) is specifically adapted for liquefying the organofluorine compound only.

10. Substance reclaiming device (30) according to any one of the claims 8 to 9, wherein the condenser (37) is designed to cool the initial gas mixture down to a temperature below 0°C, preferably below -10°C, more preferably below -20°C, more preferably below -30°C, and most preferably of about -38°C; and/or
wherein the condenser (37) further comprises a heating element to raise the temperature above 0°C, in particular for de-icing the condenser (37); and/or
wherein the cooling device (35) further comprises a heat exchanger (36), in particular a plate heat exchanger (36), for pre-cooling the initial gas mixture before it is transferred to the condenser (37).

11. Substance reclaiming device (30) according to any one of the claims 8 to 10, wherein the substance reclaiming device (30) further comprises an organofluorine compound collecting device (38) for collecting the organofluorine compound separated by the separator (34); and/or
wherein the substance reclaiming device (30) further comprises at least one organofluorine compound reservoir tank (40) for storing the organofluorine compound separated by the separator (34).

12. Substance reclaiming device (30) according to any one of the claims 8 to 11, further comprising a filter (32) arranged between an outlet opening (26) of the electrical apparatus (10) for the initial gas mixture and the compressor (25) and being designed to remove solid and/or liquid impurities from the flow of the initial gas mixture before it enters the compressor (25); and/or
wherein the compressor (25) is designed such to purge the insulation space (16) of the electrical apparatus (10), thereby forcing the initial gas mixture out of the insulation space (16); and/or
wherein it further comprises a pump designed to purge the insulation space (16) of the electrical apparatus (10), thereby forcing the initial gas mixture out of the insulation space (16).

13. An assembly of
A) an electrical apparatus (10) for the generation, transmission, distribution and/or usage of electrical energy, and
B) a substance reclaiming device (30) according to any one of the preceding claims 8 to 12,
the electrical apparatus (10) comprising a housing (12) enclosing an electrical apparatus interior space, at least a portion of said electrical apparatus interior space comprising at least one insulation space (16), in which an electrical component (14) is arranged and which contains an insulation medium (22) surrounding the electrical component (14), the insulation medium (22) comprising an organofluorine compound and at least one further component in gaseous phase,
in the housing of the electrical apparatus (10) an outlet opening (26) being arranged for transferring an initial gas mixture out of the insulation space (16), the initial gas mixture containing the organofluorine compound and at least one further component of the insulation medium (22), and
the substance reclaiming device (30) being arranged downstream of the outlet opening (26) with regard to the direction of transfer of the initial gas mixture, wherein from the separator (34) of the substance reclaiming device (30) at least one gas recycling channel (46) branches off, the gas recycling channel (46) being fluidly connected to a gas inlet opening (50) arranged in the housing (12) of the electrical apparatus (10) for reintroducing a background gas of the initial gas mixture into the insulation space (16) of the electrical apparatus (10) via a balancing valve (48), said background gas being at least essentially devoid of the organofluorine compound and said balancing valve (48) being designed to expand the background gas before being reintroduced into the insulation space (16).

14. Assembly according to claim 13, wherein the initial gas mixture is at least essentially identical to the insulation medium (22) present in the insulation space (16) at the time directly prior to reconditioning; and/or
wherein upstream of the gas inlet opening (50) a background gas treatment device (49) is arranged, in particular for purifying the background gas for being reintroduced into the insulation space (16), and more particularly the background gas treatment device (49) is or comprises a zeolite able to adsorb the organofluorine compound and/or decomposition products thereof; and/or
wherein the organofluorine compound is selected from the group consisting of: fluoroethers, in particular hydrofluoromonoethers, fluoroketones, fluoroolefins, in particular hydrofluoroolefins, fluoronitriles, in particular perfluoronitriles, as well as mixtures thereof; and/or
wherein the insulation medium (22) comprises a hydrofluoromonoether containing at least three carbon atoms; and/or
wherein the insulation medium (22) comprises a fluoroketone containing from four to twelve carbon atoms, preferably containing exactly five carbon atoms or exactly six carbon atoms, or a mixture thereof; and/or
wherein the at least one further component, more particularly the background gas, is selected from the group consisting of: air, an air component, nitrogen, oxygen, carbon dioxide, a nitrogen oxide, and mixtures thereof; and/or
wherein the electrical component (14) is a high voltage or medium voltage apparatus, or is a high voltage or medium voltage component; and/or
wherein the apparatus (10) is selected from the group consisting of: switchgear, in particular a gas-insulated switchgear (GIS); or a part and/or component thereof, busbar, bushing, cable, gas-insulated cable, cable joint, gas-insulated line (GIL), transformer, current transformer, voltage transformer, surge arrester, earthing switch, disconnector, combined disconnector and earthing switch, load-break switch, circuit breaker, any type of gas-insulated switch, high voltage apparatus, medium voltage apparatus, low voltage apparatus, direct-current apparatus, air-insulated insulator, gas-insulated metal-encapsulated insulator, sensors, capacitor, inductance, resistor, current limiter, high voltage switch, gas circuit breaker, vacuum circuit breaker, generator circuit breaker, medium voltage switch, ring main unit, recloser, sectionalizer, low voltage switch, distribution transformer, power transformer, tap changer, transformer bushing, power semiconductor device, power converter, converter station, convertor building, computing machine, and components and/or combinations of such devices.

## Patentansprüche

1. Verfahren zur Rückgewinnung von zumindest einem Stoff aus einem Isoliermedium (22) einer elektrischen Vorrichtung (10) zur Erzeugung, Übertragung, Verteilung und/oder Nutzung von elektrischer Energie, wobei das Isoliermedium (22) eine Organofluorverbindung und zumindest eine weitere Komponente in der Gasphase umfasst, wobei das Verfahren die aufeinander folgenden Schritte umfasst:
a) Transferieren einer Anfangsgasmischung, welche die Organofluorverbindung und zumindest eine weitere Komponente des Isoliermediums (22) enthält, aus einem Isolierraum (16) der elektrischen Vorrichtung (10) heraus in eine Stoffrückgewinnungsvorrichtung (30),
b) Verflüssigen der Organofluorverbindung in der Stoffrückgewinnungsvorrichtung (30) durch
b1) Komprimieren der Anfangsgasmischung und
b2) Kühlen der komprimierten Anfangsgasmischung herunter auf eine Temperatur, bei der die Organofluorverbindung flüssig wird,
c) Trennen der verflüssigten Organofluorverbindung von dem verbleibenden Gas, das die zumindest eine verbleibende Komponente der Anfangsgasmischung umfasst.

2. Verfahren nach Anspruch 1, welches des Weiteren umfasst:
d) Expandieren des verbleibenden Gases über ein Abgleichventil (48) und erneutes Einbringen von zumindest einem Anteil des verbleibenden Gases zurück in den Isolierraum (16).

3. Verfahren nach einem der vorhergehenden Ansprüche,
wobei in Schritt b) nur die Organofluorverbindung verflüssigt wird,
wobei Schritt b1) vorzugsweise so ausgeführt wird, dass der aus der Kompression resultierende Temperaturanstieg nicht die Zersetzungstemperatur der Organofluorverbindung erreicht, wodurch die Integrität der Organofluorverbindung unbeeinflusst bleibt; und/oder
wobei in Schritt b1) die Anfangsgasmischung bis auf einen Druck im Bereich von 2 bar bis 20 bar, vorzugsweise 5 bar bis 10 bar und am meisten bevorzugt bis etwa 9 bar komprimiert wird; und/oder wobei in Schritt b2) die Anfangsgasmischung bis auf eine Temperatur unter 0 °C, vorzugsweise unter -10 °C, bevorzugter unter -20 °C, noch bevorzugter unter -30 °C und am meisten bevorzugt etwa -38 °C heruntergekühlt wird; und/oder
wobei nach Schritt b1) und vor Schritt b2) die Anfangsgasmischung vorgekühlt wird.

4. Verfahren nach einem der vorhergehenden Ansprüche,
wobei die Anfangsgasmischung durch einen Filter (32) von flüssigen und/oder festen Verunreinigungen gereinigt wird, bevor sie in einen Separator (34) der Stoffrückgewinnungsvorrichtung (30) transferiert wird; und/oder
wobei das Verfahren nach Schritt c) den weiteren Schritt umfasst:
e) Sammeln der verflüssigten Organofluorverbindung durch eine Organofluorverbindungssammelvorrichtung (38) der Rückgewinnungsvorrichtung (30); und/oder wobei das Verfahren nach Schritt c) oder gegebenenfalls nach Schritt d) und/oder e) den weiteren Schritt umfasst:
f) Fördern der Organofluorverbindung zu einem Organofluorverbindungsreservoirtank (40) der Stoffrückgewinnungsvorrichtung (30), um gelagert zu werden.

5. Verfahren nach einem der vorhergehenden Ansprüche,
wobei die Anfangsgasmischung durch Spülen des Isolierraums (16) transferiert wird, wodurch die Anfangsgasmischung aus dem Isolierraum (16) heraus getrieben wird; und/oder
wobei das verbleibende Gas gereinigt wird, bevor es erneut in den Isolierraum (16) eingebracht wird; und/oder
wobei Wärme, die während der Kompression der Anfangsgasmischung gemäß Schritt b1) generiert wird, zum Aufheizen des verbleibenden Gases verwendet wird, bevor es erneut in den Isolierraum (16) eingebracht wird.

6. Verfahren nach einem der vorhergehenden Ansprüche,
wobei das verbleibende Gas oder ein Anteil davon getrennt von jeglicher anderen erneut einzubringenden Komponente, insbesondere von jeglicher erneut einzubringenden Organofluorverbindung, erneut in den Isolierraum eingebracht wird, oder
wobei nur das verbleibende Gas erneut zurück in den Isolierraum eingebracht wird.

7. Verfahren nach einem der vorhergehenden Ansprüche,
wobei das verbleibende Gas oder ein Anteil davon in die Atmosphäre freigesetzt wird, insbesondere wobei das verbleibende Gas für die Umgebung ungefährlich ist.

8. Stoffrückgewinnungsvorrichtung (30), insbesondere zum Implementieren des Verfahrens nach einem der vorhergehenden Ansprüche, um zumindest einen Stoff einer Anfangsgasmischung zurückzugewinnen, die in dem Isolierraum (16) einer elektrischen Vorrichtung (10) vorhanden ist, wobei die Anfangsgasmischung eine Organofluorverbindung und zumindest eine weitere Komponente enthält, die Stoffrückgewinnungsvorrichtung (30) einen Separator (34) zum Trennen einer Organofluorverbindung von zumindest einer verbleibenden Komponente der Anfangsgasmischung umfasst, wobei der Separator (34) einen Kompressor (25) in Kombination mit einer Kühlvorrichtung (35) umfasst, die einen Kondensierer (37) umfasst, um die Organofluorverbindung zu verflüssigen, wobei der Kompressor (25) vorgeordnet zu dem Kondensierer (37) angeordnet ist, gesehen in Richtung des Transfers der Anfangsgasmischung aus der elektrischen Vorrichtung (10) zu der Stoffrückgewinnungsvorrichtung (30), und konzipiert ist, um die Anfangsgasmischung zu komprimieren, bevor sie in den Kondensierer (37) transferiert wird, wobei die Stoffrückgewinnungsvorrichtung (30) einen Gasrecyclingkanal (46) umfasst, der konzipiert ist, um fließtechnisch an eine Gaseinlassöffnung angeschlossen zu werden, die in einem Gehäuse (12) der elektrischen Vorrichtung (10) vorgesehen ist, um das verbleibende Gas erneut in den Isolierraum (16) einzubringen.

9. Stoffrückgewinnungsvorrichtung (30) nach Anspruch 8, wobei der Gasrecyclingkanal (46) frei von jeglichem Einlassanschluss zur Zufuhr der abgetrennten Organofluorverbindung ist; und/oder
wobei die Rückgewinnungsvorrichtung (30) Mittel (26, 28; 50) zum fließtechnischen Anschließen des Separators (34) an den Isolierraum (16) der elektrischen Vorrichtung (10) umfasst; und/oder wobei die Stoffrückgewinnungsvorrichtung (30) des Weiteren ein Abgleichventil (48) umfasst, das nachgeordnet zu dem Kondensierer (37) angeordnet ist, gesehen in Richtung des Transfers der Anfangsgasmischung aus der Stoffrückgewinnungsvorrichtung (30) zu der elektrischen Vorrichtung (10), und konzipiert ist, um das verbleibende Gas zu expandieren, nachdem die Anfangsgasmischung den Kondensierer (37) durchlaufen hat; und/oder
wobei der Kompressor (37) konzipiert ist, um die Anfangsgasmischung bis auf einen Maximaldruck pₘₐₓ zu komprimieren, wobei der Maximaldruck pₘₐₓ so gewählt wird, dass die Maximaltemperatur Tₘₐₓ, die aus der Kompression resultiert, unter der Zersetzungstemperatur der Organofluorverbindung liegt; und/oder
wobei der Kompressor (25) konzipiert ist, um die Anfangsgasmischung bis auf einen Druck im Bereich von 2 bar bis 20 bar, vorzugsweise 5 bar bis 10 bar und am meisten bevorzugt bis etwa 9 bar zu komprimieren; und/oder
wobei der Kondensierer (37) speziell vorgesehen ist, um nur die Organofluorverbindung zu verflüssigen.

10. Stoffrückgewinnungsvorrichtung (30) nach einem der Ansprüche 8 bis 9, wobei der Kondensierer (37) konzipiert ist, um die Anfangsgasmischung bis herunter auf eine Temperatur unter 0 °C, vorzugsweise unter -10 °C, bevorzugter unter -20 °C, bevorzugter unter -30 °C und am meisten bevorzugt etwa -38°C zu kühlen; und/oder
wobei der Kondensierer (37) des Weiteren ein Heizelement umfasst, um die Temperatur auf über 0 °C anzuheben, insbesondere zum Enteisen des Kondensierers (37); und/oder
wobei die Kühlvorrichtung (35) des Weiteren einen Wärmetauscher (36) umfasst, insbesondere einen Plattenwärmetauscher (36), um die Anfangsgasmischung vorzukühlen, bevor sie in den Kondensierer (37) transferiert wird.

11. Stoffrückgewinnungsvorrichtung (30) nach einem der Ansprüche 8 bis 10, wobei die Stoffrückgewinnungsvorrichtung (30) des Weiteren eine Organofluorverbindungssammelvorrichtung (38) umfasst, um die von dem Separator (34) abgetrennte Organofluorverbindung zu sammeln; und/oder wobei die Stoffrückgewinnungsvorrichtung (30) des Weiteren zumindest einen Organofluorverbindungsreservoirtank (40) umfasst, um die von dem Separator (34) abgetrennte Organofluorverbindung zu lagern.

12. Stoffrückgewinnungsvorrichtung (30) nach einem der Ansprüche 8 bis 11, des Weiteren umfassend einen Filter (32), der zwischen einer Auslassöffnung (26) der elektrischen Vorrichtung (10) für die Anfangsgasmischung und dem Kompressor (25) angeordnet ist und konzipiert ist, um feste und/oder flüssige Verunreinigungen aus dem Fluss der Anfangsgasmischung zu entfernen, bevor sie in den Kompressor (25) eintritt; und/oder
wobei der Kompressor (25) konzipiert ist, um den Isolierraum (16) der elektrischen Vorrichtung (10) zu spülen, wodurch die Anfangsgasmischung aus dem Isolierraum (16) heraus getrieben wird; und/oder wobei er des Weiteren eine Pumpe umfasst, die konzipiert ist, um den Isolierraum (16) der elektrischen Vorrichtung (10) zu spülen, wodurch die Anfangsgasmischung aus dem Isolierraum (16) heraus getrieben wird.

13. Anordnung aus
A) einer elektrischen Vorrichtung (10) zur Erzeugung, Übertragung, Verteilung und/oder Nutzung von elektrischer Energie, und
B) einer Stoffrückgewinnungsvorrichtung (30) nach einem der vorhergehenden Ansprüche 8 bis 12,
wobei die elektrische Vorrichtung (10) ein Gehäuse (12) umfasst, das einen Innenraum der elektrischen Vorrichtung umschließt, wobei zumindest ein Anteil des Innenraums der elektrischen Vorrichtung zumindest einen Isolierraum (16) umfasst, in dem eine elektrische Komponente (14) angeordnet ist und der ein Isoliermedium (22) enthält, das die elektrische Komponente (14) umgibt, wobei das Isoliermedium (22) eine Organofluorverbindung und zumindest eine weitere Komponente in der Gasphase umfasst,
wobei im Gehäuse der elektrischen Vorrichtung (10) eine Auslassöffnung (26) angeordnet ist, um eine Anfangsgasmischung aus dem Isolierraum (16) heraus zu transferieren, wobei die Anfangsgasmischung die Organofluorverbindung und zumindest eine weitere Komponente des Isoliermediums (22) enthält, und die Stoffrückgewinnungsvorrichtung (30) nachgeordnet zu der Auslassöffnung (26) angeordnet ist, gesehen in Richtung des Transfers der Anfangsgasmischung, wobei von dem Separator (34) der Stoffrückgewinnungsvorrichtung (30) zumindest ein Gasrecyclingkanal (46) abzweigt, der Gasrecyclingkanal (46) fließtechnisch an eine Gaseinlassöffnung (50) angeschlossen ist, die in dem Gehäuse (12) der elektrischen Vorrichtung (10) angeordnet ist, um ein Hintergrundgas der Anfangsgasmischung über ein Abgleichventil (48) erneut in den Isolierraum (16) der elektrischen Vorrichtung (10) einzubringen, wobei das Hintergrundgas zumindest im Wesentlichen frei von der Organofluorverbindung ist und das Abgleichventil (48) konzipiert ist, um das Hintergrundgas zu expandieren, bevor es erneut in den Isolierraum (16) eingebracht wird.

14. Anordnung nach Anspruch 13, wobei die Anfangsgasmischung zumindest im Wesentlichen identisch mit dem Isoliermedium (22) ist, das in dem Isolierraum (16) zu einer Zeit unmittelbar vor der Rekonditionierung vorhanden ist; und/oder
wobei vorgeordnet zu der Gaseinlassöffnung (50) eine Hintergrundgasbehandlungsvorrichtung (49) angeordnet ist, insbesondere zur Reinigung des Hintergrundgases, damit es erneut in den Isolierraum (16) eingebracht werden kann, und wobei insbesondere die Hintergrundgasbehandlungsvorrichtung (49) Zeolith ist oder einen solchen umfasst, der in der Lage ist, die Organofluorverbindung und/oder Zersetzungsprodukte davon zu adsorbieren; und/oder
wobei die Organofluorverbindung ausgewählt ist aus der Gruppe bestehend aus: Fluorethern, insbesondere Hydrofluormonoethern, Fluorketonen, Fluorolefinen, insbesondere Hydrofluorolefinen, Fluornitrilen, insbesondere Perfluornitrilen, sowie Mischungen davon; und/oder
wobei das Isoliermedium (22) einen Hydrofluormonoether umfasst, der zumindest drei Kohlenstoffatome enthält; und/oder
wobei das Isoliermedium (22) ein Fluorketon umfasst, das vier bis zwölf Kohlenstoffatome enthält, vorzugsweise genau fünf Kohlenstoffatome oder genau sechs Kohlenstoffatome enthält, oder eine Mischung davon; und/oder
wobei die zumindest eine weitere Komponente, insbesondere das Hintergrundgas, ausgewählt ist aus der Gruppe bestehend aus: Luft, einer Luftkomponente, Stickstoff, Sauerstoff, Kohlendioxid, einem Stickoxid und Mischungen davon; und/oder
wobei die elektrische Komponente (14) eine Hochspannungs- oder Mittelspannungsvorrichtung ist, oder eine Hochspannungs- oder Mittelspannungskomponente ist; und/oder wobei die Vorrichtung (10) ausgewählt ist aus der Gruppe bestehend aus: Schaltanlagen, insbesondere einer gasisolierten Schaltanlage (GIS); oder einem Teil und/oder einer Komponente davon, einer Sammelschiene, Durchführung, einem Kabel, einem gasisolierten Kabel, Kabelspleiß, einer gasisolierten Leitung (GIL), einem Transformator, Stromtransformator, Spannungstransformator, Überspannungsableiter, Masseschalter, Trennschalter, kombiniertem Trennschalter und Masseschalter, Lasttrennschalter, Schutzschalter, jeglichem Typ von gasisoliertem Schalter, Hochspannungsvorrichtung, Mittelspannungsvorrichtung, Niederspannungsvorrichtung, Gleichstromvorrichtung, luftisoliertem Isolator, gasisoliertem metallgekapseltem Isolator, Sensoren, Kondensator, Spule, Widerstand, Strombegrenzer, Hochspannungsschalter, Gasschutzschalter, Vakuumschutzschalter, Generatorschutzschalter, Mittelspannungsschalter, Ring-Haupteinheit, Kurzunterbrechung, Sektionalisierer, Niederspannungsschalter, Verteilungstransformator, Leistungstransformator, Stufensteller, Transformatordurchführung, Leistungshalbleitervorrichtung, Stromrichter, Stromrichterstation, Umrichtergebäude, Rechenmaschine und Komponenten und/oder Kombinationen solcher Vorrichtungen.

## Revendications

1. Appareil destiné à récupérer au moins une substance présente dans un milieu isolant (22) d'un appareil électrique (10) pour la production, la transmission, la distribution et/ou l'utilisation d'une énergie électrique, le milieu isolant (22) comprenant un composé organofluoré et au moins un autre composant en phase gazeuse, le procédé comprenant les étapes ultérieures de :
a) transfert d'un mélange gazeux initial contenant le composé organofluoré et d'au moins un autre composant du milieu isolant (22) hors d'un espace isolant (16) de l'appareil électrique (10) vers un dispositif de récupération de substance (30),
b) liquéfaction du composé organofluoré dans le dispositif de récupération de substance (30) par
b1) compression du mélange gazeux initial, et
b2) refroidissement du mélange gazeux initial comprimé à une température à laquelle se liquéfie le composé organofluoré,
c) séparation du composé organofluoré liquéfié du gaz restant comprenant l'au moins un composant restant du mélange gazeux initial.

2. Procédé selon la revendication 1, comprenant en outre
d) la dilatation du gaz restant par l'intermédiaire d'une valve d'équilibrage (48) et la réintroduction d'au moins une partie du gaz restant dans l'espace isolant (16) .

3. Procédé selon l'une quelconque des revendications précédentes, dans lequel, dans l'étape b), seul le composé organofluoré est liquéfié,
dans lequel l'étape b1) est de préférence réalisée de sorte que l'augmentation de température obtenue de la compression n'atteigne pas une température de décomposition du composé organofluoré, laissant l'intégrité du composé organofluoré non affectée ; et/ou
dans lequel, dans l'étape b1), le mélange gazeux initial est comprimé jusqu'à une pression dans la plage de 2 bars à 20 bars, de préférence de 5 bars à 10 bars, et mieux encore à environ 9 bars ; et/ou
dans lequel, dans l'étape b2), le mélange gazeux initial est refroidi à une température inférieure à 0 °C, de préférence inférieure à -10 °C, plus préférentiellement inférieure à -20 °C, de préférence encore inférieure à -30 °C, et mieux encore d'environ -38 °C ; et/ou
dans lequel, après l'étape b1) et avant l'étape b2), le mélange gazeux initial est préalablement refroidi.

4. Procédé selon l'une quelconque des revendications précédentes, dans lequel le mélange gazeux initial est purifié d'impuretés liquides et/ou solides par un filtre (32) avant d'être transféré vers un séparateur (34) du dispositif de récupération de substance (30) ; et/ou
dans lequel, après l'étape c), le procédé comprend l'étape supplémentaire de :
e) collecte du composé organofluoré liquéfié par un dispositif de collecte de composé organofluoré (38) du dispositif de récupération (30) ; et/ou
dans lequel, après l'étape c) ou éventuellement après l'étape d) et/ou e), le procédé comprend l'étape supplémentaire de :
f) transport du composé organofluoré vers une cuve (40) de réservoir de composé organofluoré du dispositif de récupération de substance (30) pour être stocké.

5. Procédé selon l'une quelconque des revendications précédentes, dans lequel le mélange gazeux initial est transféré en purgeant l'espace isolant (16), ce qui pousse le mélange gazeux initial hors de l'espace isolant (16) ; et/ou
dans lequel le gaz restant est purifié avant d'être réintroduit dans l'espace isolant (16) ; et/ou
dans lequel la chaleur, qui est dégagée pendant la compression du mélange gazeux initial selon l'étape b1), est utilisée pour chauffer le gaz restant avant qu'il soit réintroduit dans l'espace isolant (16).

6. Procédé selon l'une quelconque des revendications précédentes, dans lequel le gaz restant ou une partie de celui-ci est réintroduit(e) dans l'espace isolant séparément de tout autre composant à réintroduire, en particulier de tout composé organofluoré à réintroduire, ou
dans lequel seul le gaz restant est réintroduit dans l'espace isolant.

7. Procédé selon l'une quelconque des revendications précédentes, dans lequel le gaz restant ou une partie de celui-ci est libéré(e) dans l'atmosphère, en particulier dans lequel le gaz restant n'est pas dangereux pour l'environnement.

8. Dispositif de récupération de substance (30), en particulier pour mettre en œuvre le procédé selon l'une quelconque des revendications précédentes, permettant de récupérer au moins une substance d'un mélange gazeux initial contenu dans l'espace isolant (16) d'un appareil électrique (10), le mélange gazeux initial contenant un composé organofluoré et au moins un autre composant, le dispositif de récupération de substance (30) comprenant un séparateur (34) pour séparer un composé organofluoré présent dans au moins un composant restant du mélange gazeux initial, ledit séparateur (34) comprenant un compresseur (25) en association avec un dispositif de refroidissement (35) comprenant un condenseur (37) pour liquéfier le composé organofluoré, ledit compresseur (25) étant disposé en amont du condenseur (37), lorsqu'on regarde dans la direction de transfert du mélange gazeux initial à partir de l'appareil électrique (10) vers le dispositif de récupération de substance (30), et étant conçu pour comprimer le mélange gazeux initial avant qu'il soit transféré vers le condenseur (37), le dispositif de récupération de substance (30) comprenant un canal (46) de recyclage de gaz conçu pour être en communication fluidique avec une ouverture d'admission de gaz disposée dans un logement (12) de l'appareil électrique (10) pour réintroduire le gaz restant dans l'espace isolant (16).

9. Dispositif de récupération de substance (30) selon la revendication 8, dans lequel ledit canal (46) de recyclage de gaz est dépourvu de tout raccord d'admission pour l'alimentation en composé organofluoré séparé ; et/ou
dans lequel le dispositif de récupération (30) comprend des moyens (26, 28 ; 50) pour raccorder fluidiquement le séparateur (34) avec l'espace isolant (16) de l'appareil électrique (10) ; et/ou
dans lequel le dispositif de récupération de substance (30) comprend en outre une valve d'équilibrage (48), qui est disposée en aval du condenseur (37), lorsqu'on regarde dans la direction de transfert du mélange gazeux initial depuis le dispositif de récupération de substance (30) vers l'appareil électrique (10), et qui est conçue pour dilater le gaz restant après que le mélange gazeux initial a dépassé le condenseur (37) ; et/ou
dans lequel le compresseur (37) est conçu pour comprimer le mélange gazeux initial à une pression maximum pₘₐₓ, ladite pression maximum pₘₐₓ étant choisie de sorte que la température maximum Tₘₐₓ obtenue de la compression se situe en dessous de la température de décomposition du composé organofluoré ; et/ou
dans lequel le compresseur (25) est conçu pour comprimer le mélange gazeux initial jusqu'à une pression dans la plage de 2 bars à 20 bars, de préférence de 5 bars à 10 bars, et mieux encore à environ 9 bars ; et/ou
dans lequel le condenseur (37) est plus particulièrement adapté à la liquéfaction du composé organofluoré uniquement.

10. Dispositif de récupération de substance (30) selon l'une quelconque des revendications 8 et 9, dans lequel le condenseur (37) est conçu pour refroidir le mélange gazeux initial à une température inférieure à 0 °C, de préférence inférieure à -10 °C, plus préférentiellement inférieure à -20 °C, de préférence inférieure à -30 °C, et mieux encore d'environ -38 °C ; et/ou
dans lequel le condenseur (37) comprend en outre un élément chauffant pour élever la température au-dessus de 0 °C, en particulier pour dégivrer le condenseur (37) ; et/ou
dans lequel le dispositif de refroidissement (35) comprend en outre un échangeur de chaleur (36), en particulier un échangeur de chaleur à plaques (36), pour refroidir préalablement le mélange gazeux initial avant qu'il soit transféré vers le condenseur (37).

11. Dispositif de récupération de substance (30) selon l'une quelconque des revendications 8 à 10, le dispositif de récupération de substance (30) comprenant en outre un dispositif de collecte (38) de composé organofluoré pour collecter le composé organofluoré séparé par le séparateur (34) ; et/ou
dans lequel le dispositif de récupération de substance (30) comprend en outre au moins une cuve (40) de réservoir de composé organofluoré pour stocker le composé organofluoré séparé par le séparateur (34).

12. Dispositif de récupération de substance (30) selon l'une quelconque des revendications 8 à 11, comprenant en outre un filtre (32) agencé entre une ouverture d'évacuation (26) de l'appareil électrique (10) pour le mélange gazeux initial et le compresseur (25) et étant conçu pour éliminer des impuretés solides et/ou liquides du flux du mélange gazeux initial avant qu'il entre dans le compresseur (25) ; et/ou
dans lequel le compresseur (25) est conçu ainsi pour purger l'espace isolant (16) de l'appareil électrique (10), ce qui pousse le mélange gazeux initial hors de l'espace isolant (16) ; et/ou
dans lequel il comprend en outre une pompe conçue pour purger l'espace isolant (16) de l'appareil électrique (10), ce qui pousse le mélange gazeux initial hors de l'espace isolant (16).

13. Ensemble composé de
A) un appareil électrique (10) pour la production, la transmission, la distribution et/ou l'utilisation d'énergie électrique, et
B) un dispositif de récupération de substance (30) selon l'une quelconque des revendications 8 à 12 précédentes,
l'appareil électrique (10) comprenant un logement (12) renfermant un espace intérieur d'appareil électrique, au moins une partie dudit espace intérieur d'appareil électrique comprenant au moins un espace isolant (16), dans lequel un composant électrique (14) est agencé et qui contient un milieu isolant (22) entourant le composant électrique (14), le milieu isolant (22) comprenant un composé organofluoré et au moins un autre composant en phase gazeuse,
dans le logement de l'appareil électrique (10) une ouverture d'évacuation (26) étant agencée pour transférer un mélange gazeux initial hors de l'espace isolant (16), le mélange gazeux initial contenant le composé organofluoré et au moins un autre composant du milieu isolant (22), et
le dispositif de récupération de substance (30) étant disposé en aval de l'ouverture d'évacuation (26) par rapport à la direction de transfert du mélange gazeux initial, dans lequel, depuis le séparateur (34) du dispositif de récupération de substance (30), au moins un canal (46) de recyclage de gaz se ramifie, le canal (46) de recyclage de gaz étant en communication fluidique avec une ouverture d'admission gazeuse (50) disposée dans le logement (12) de l'appareil électrique (10) pour réintroduire un gaz de fond du mélange gazeux initial dans l'espace isolant (16) de l'appareil électrique (10) par l'intermédiaire d'une valve d'équilibrage (48), ledit gaz de fond étant au moins essentiellement dépourvu du composé organofluoré et ladite valve d'équilibrage (48) étant conçue pour dilater le gaz de fond avant qu'il soit réintroduit dans l'espace isolant (16).

14. Ensemble selon la revendication 13, dans lequel le mélange gazeux initial est au moins essentiellement identique au milieu isolant (22) présent dans l'espace isolant (16) au moment précédant immédiatement le reconditionnement ; et/ou
dans lequel, en amont de l'ouverture d'admission gazeuse (50), un dispositif de traitement (49) de gaz de fond est disposé, en particulier pour purifier le gaz de fond pour qu'il soit réintroduit dans l'espace isolant (16), et plus particulièrement le dispositif de traitement (49) de gaz de fond est ou comprend une zéolite susceptible d'adsorber le composé organofluoré et/ou des produits de décomposition de celui-ci ; et/ou
dans lequel le composé organofluoré est choisi dans le groupe consistant en : fluoroéthers, en particulier hydrofluoromonoéthers, fluorocétones, fluorooléfines, en particulier hydrofluorooléfines, fluoronitriles, en particulier perfluoronitriles, ainsi que des mélanges de ceux-ci ; et/ou
dans lequel le milieu isolant (22) comprend un hydrofluoromonoéther contenant au moins trois atomes de carbone ; et/ou
dans lequel le milieu isolant (22) comprend une fluorocétone contenant de quatre à douze atomes de carbone, de préférence contenant exactement cinq atomes de carbone ou exactement six atomes de carbone, ou un mélange de ceux-ci ; et/ou
dans lequel l'au moins un composant supplémentaire, plus particulièrement le gaz de fond, est choisi dans le groupe consistant en : l'air, un composant de l'air, l'azote, l'oxygène, le dioxyde de carbone, l'oxyde d'azote et des mélanges de ceux-ci ; et/ou
dans lequel le composant électrique (14) est un appareil haute tension ou moyenne tension, ou est un composant haute tension ou moyenne tension ; et/ou
dans lequel l'appareil (10) est choisi dans le groupe consistant en : un commutateur d'alimentation, en particulier un commutateur d'alimentation à isolation gazeuse (GIS) ; ou une partie et/ou un composant de celui-ci, une barre omnibus, une traversée, un câble, un câble à isolation gazeuse, un joint de câble, une ligne à isolation gazeuse (GIL), un transformateur, un transformateur de courant, un transformateur de tension, un parasurtenseur, un commutateur de mise à la terre, un sectionneur, un commutateur de mise à la terre et sectionneur combiné, un interrupteur coupe-charge, un disjoncteur, un type quelconque de commutateur à isolation gazeuse, un appareil haute tension, un appareil moyenne tension, un appareil basse tension, un appareil à courant continu, un isolateur isolé de l'air, un isolateur encapsulé dans un métal et à isolation gazeuse, des capteurs, un condensateur, une bobine d'inductance, une résistance, un limiteur de courant, un commutateur haute tension, un disjoncteur de circuit gazeux, un disjoncteur de circuit à vide, un disjoncteur de circuit de générateur, un commutateur moyenne tension, une unité fonctionnelle en boucle, un disjoncteur à réenclenchement, un sectionneur, un commutateur basse tension, un transformateur de distribution, un transformateur de puissance, un commutateur à prises de réglage, une traversée de transformateur, un dispositif à semiconducteur de puissance, un convertisseur puissance, une station de convertisseur, un bâtiment de convertisseur, une machine informatique et des composants et/ou des combinaisons de tels dispositifs.
